# EUROPEAN PATENT APPLICATION

(11) **EP 1 723 926 A2**
(43) Date of publication of application: **22.11.2006**
(21) Application number: 06252623.1
(22) Date of filing: 19.05.2006
(51) Int. Cl.: A61C 7/12

(54) **Orthodontic brackets and appliances and methods of making orthodontic brackets**

(30) Priority: 20.05.2005 US 683023 P; 05.05.2006 US 381856
(71) Applicant: ORMCO CORPORATION, Orange, CA 92867 (US)
(72) Inventor: Oda, Todd I., Torrance, CA 90504 (US)
(74) Representative: Findlay, Alice Rosemary

(57) **Abstract**

Orthodontic brackets and appliances, and methods of making and using orthodontic brackets. The orthodontic bracket may include a molded identification marking comprising at least one alphanumeric character disposed on a visible surface. A kit of self-ligating orthodontic brackets may be provided that includes individual brackets of different archwire slot widths for attachment to anterior and posterior teeth during a corrective orthodontic treatment. An appliance or auxiliary may be provided that includes a spring-loaded latch operative to secure the appliance to an orthodontic bracket.

## Description

The invention relates generally to orthodontic brackets and appliances for use with orthodontic brackets.

Orthodontic brackets represent a principal component of all corrective orthodontic treatments devoted to improving a patient's occlusion. In conventional corrective orthodontic treatments, brackets are affixed to the patient's teeth and an archwire is threaded through a slot of each bracket. The archwire applies corrective forces that coerce the teeth to move to orthodontically correct positions. Traditional ligatures, such as small elastomeric O-rings or fine metal wires, are employed to retain the archwire within each bracket slot. These traditional ligatures closely secure the archwire within an archwire slot defined in the bracket body with an engagement characterized by little or no available play between the archwire and archwire slot. However, traditional ligatures have certain recognized disadvantages, such as difficulties in handling and application to the brackets.

Self-ligating orthodontic brackets have been developed that eliminate the need for ligatures. Typically, a movable cover, such as a hinged latch or slide, on the slide captivates the archwire with the bracket slot. In the absence of a ligature, however, an archwire installed in an archwire slot of a self-ligating bracket may experience a small amount of spatial clearance relative to the walls bounding the archwire slot. This play between the archwire and the bounding walls of the archwire slot may prevent or inhibit the most effective orthodontic treatment.

During corrective orthodontic treatments, orthodontic brackets applied to anterior teeth tend to experience a loss of torque control. Traditional techniques that doctors currently use to compensate for this loss of torque control include using a .018 bracket on the anterior teeth along with .022 brackets on all other teeth. Although this technique has proven successful in compensating for the loss of torque control for brackets that are conventionally ligated, it would be more clinically efficient if doctors did not have to compensate for the loss of torque control on, for example, anterior brackets. For example, placing .022 brackets on anterior teeth and .018 brackets on posterior teeth may compensate for the loss of torque control. However, corrective orthodontic treatments with .022 brackets often use a progression of archwire sizes in which the largest archwire has a dimension of 0.019. Hence, this archwire could not be applied because the .018 slots are too narrow.

Most conventional orthodontic brackets are formed using investment casting. During casting, an identification marking may be transferred to the bracket body from a complementary mark on the casting mold. However, a significant disadvantage of investment casting is that alphanumeric characters cannot be integrated into the identification marking because fine details cannot be transferred from the complementary mark on the casting mold. Instead, conventional identification markings are usually applied as simple symbols having the form of non-alphanumeric geometrical shapes, such as bars or circles. A significant disadvantage of such rudimentary identification markings is that the doctor must interpret what the various symbols mean in relation to the bracket type.

Another conventional bracket identification technique is to directly scribe the bracket body using laser etching. However, a significant disadvantage of laser etching is that the identification markings are scribed in the bracket body after manufacture, which entails additional process steps and expense.

Yet another conventional bracket identification technique is to apply a temporary color identification dot to the bracket body. However, a significant disadvantage of such temporary color identification dots is that they are designed to dissolve in the environment presented inside the patient's mouth. Consequently, the identification of the bracket type is completely lost shortly after the bracket is deployed in the patient's mouth. Another significant disadvantage of temporary color identification markings is that the doctor must interpret what the color identification dots mean in relation to the bracket type.

An appliance or auxiliary is often installed in a vertical slot extending through the bracket body of the bracket in a direction orthogonal to the direction in which the archwire slot is aligned. After installation, an end of a shank of the auxiliary protrudes from the exit of the vertical slot. The doctor bends this protruding shank end, which is not resilient, laterally to contact the bracket body. This plastic deformation retains the bent configuration, after the bending force is released, for securing the auxiliary against removal from the vertical slot. However, the bent end of the protruding shank may present an irritant for the patient. To remove such conventional auxiliaries from the vertical slot, the doctor must cut or snip the bent end. Removal is difficult because the bent end is in close proximity to the bracket body, which limits the space available for a cutting implement.

Consequently, there is a need for an orthodontic bracket, methods of making and using orthodontic brackets, and an appliance for use with an orthodontic bracket that addresses these and other deficiencies of conventional orthodontic brackets and appliances.

In one embodiment of the present invention, an appliance is provided for use with an orthodontic bracket having a vertical slot extending through a bracket body between first and second apertures. The appliance comprises a shank configured to extend in the vertical slot. The shank includes a first end projecting from the first aperture and a second end projecting from the second aperture when the shank is disposed in the vertical slot. The appliance further comprises a spring-loaded latch disposed at the second end of the shank. The spring-loaded latch comprises a resilient portion of the shank and a detent adapted to contact a portion of the bracket body adjacent to and outside of (i.e., exteriorly bordering) the second aperture for securing the appliance to the orthodontic bracket.

In another embodiment of the present invention, an appliance is provided for an orthodontic bracket having a vertical slot. The appliance comprises a coupling member and a shank having a central portion received in the vertical slot when the appliance is mounted to the orthodontic bracket and a neck disposed between the central portion and the coupling member. The neck and central portion comprise a length of continuous, non-stranded wire. The neck has a smaller cross-sectional area than the central portion.

In another embodiment of the present invention, a kit for performing an orthodontic treatment comprises a first orthodontic bracket having a first archwire slot defined in a first bracket body by a substantially parallel first plurality of side walls. A first ligating cover is mounted to the first bracket body for movement relative to the first bracket body between an opened position permitting access to the first archwire slot and a closed position for closing the access to the first archwire slot. The first plurality of side walls are separated along a majority of the first archwire slot by a first slot width. The kit further comprises a second orthodontic bracket having a second archwire slot defined in a second bracket body by a substantially parallel second plurality of side walls. A second ligating cover is mounted to the second bracket body for movement relative to the second bracket body between an opened position permitting access to the second archwire slot and a closed position for closing the access to the second archwire slot. The second plurality of side walls are separated along a majority of the second archwire slot by a second slot width. The second slot width differs from the first slot width.

There is also disclosed a method for performing an orthodontic treatment on a patient comprises mounting a first orthodontic bracket having an archwire slot of a first slot width on a posterior tooth of the patient and mounting a second orthodontic bracket having an archwire slot of a second slot width on an anterior tooth of the patient. The second slot width is smaller than the first slot width. The method further comprises inserting an archwire into the archwire slot of the first orthodontic bracket and the archwire slot of the second orthodontic bracket. Ligating covers coupled respectively with the first and second bracket are moved to close the corresponding archwire slots for securing the archwire to the first and second orthodontic brackets.

In another embodiment of the present invention, an orthodontic bracket for coupling an archwire with a tooth comprises a bracket body having a visible surface when the orthodontic bracket is coupled with the tooth. The orthodontic bracket further comprises a molded identification marking comprising at least one alphanumeric character disposed on the visible surface.

In another embodiment of the present invention, a self-ligating orthodontic bracket is provided for coupling an archwire with a tooth. The orthodontic bracket comprises a bracket body having an archwire slot and a ligating cover coupled with the bracket body for movement relative to the archwire slot. The ligating cover is movable between an opened position for inserting the archwire into the archwire slot and a closed position for securing the archwire within the archwire slot. The ligating cover has a visible surface on which is disposed a molded identification marking comprising at least one alphanumeric character.

In another embodiment of the present invention, a method of making an orthodontic bracket comprises injection molding a bracket body of the orthodontic bracket. The method further comprises defining an identification marking on the bracket body during the injection molding.

The invention will now be described by way of example with reference to the accompanying drawings in which:
FIG. 1 A is a perspective view of a self-ligating orthodontic bracket of the present invention in which a ligating cover is shown in an opened position providing access to an archwire slot.
FIG. 1 B is a perspective view similar to FIG. 1 A in which the ligating cover is in a closed and latched condition for closing access to the archwire slot.
FIG. 1C is a perspective view of a portion of a mold assembly for fabricating a bracket body of the self-ligating orthodontic bracket of FIG. 1A.
FIG. 2A is a perspective view of the self-ligating orthodontic bracket of FIG. 1A in which an appliance of the present invention is shown removed from a vertical slot extending through a bracket body of the bracket.
FIG. 2B is a perspective view similar to FIG. 2A in which the appliance is installed in the vertical slot.
FIG. 2C is a cross-sectional view taken generally along line 2C-2C in FIG. 2A.
FIG. 2D is a cross-sectional view taken generally along line 2D-2D in FIG. 2A.
FIG. 3 is a side view of the assembled appliance and self-ligating orthodontic bracket of FIG. 2B.
FIG. 4 is a perspective view of an appliance in accordance with an alternative embodiment of the present invention.
FIG. 5 is a side view of self-ligating orthodontic brackets of the present invention mounted to a pair of teeth inside a patient's mouth.

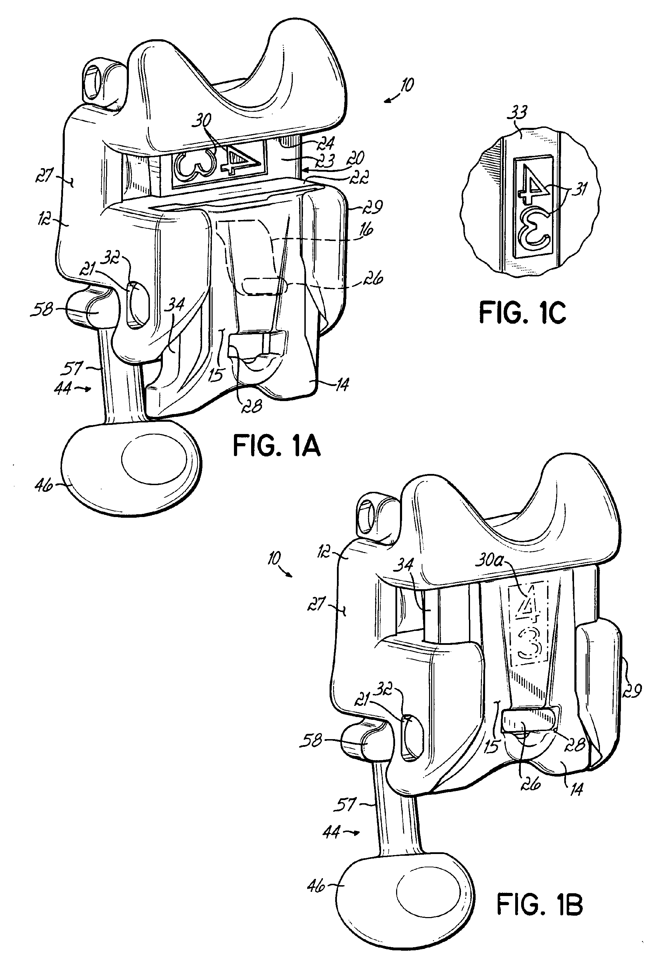

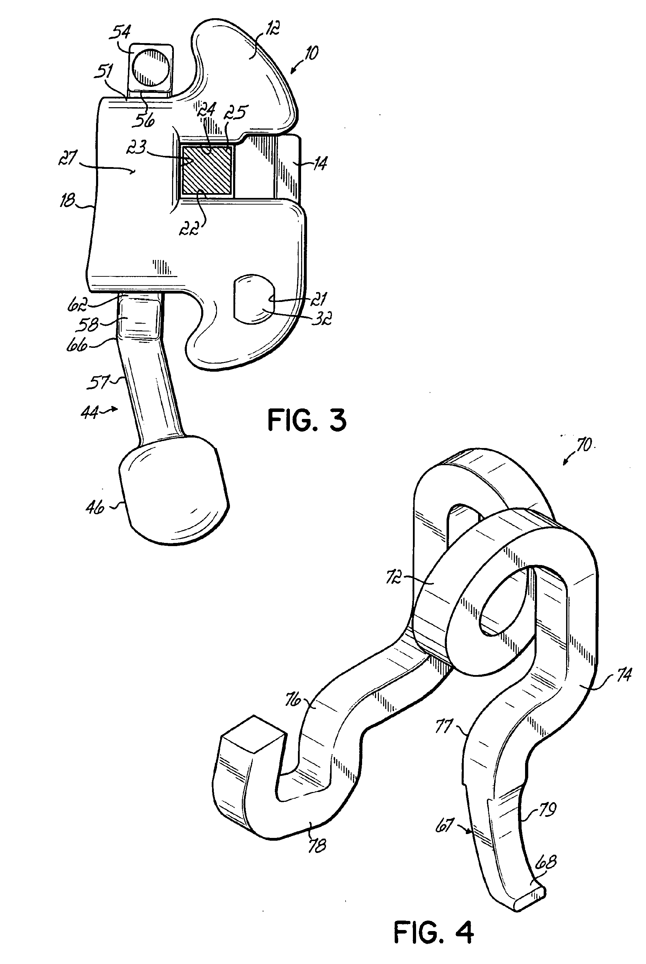

Referring to FIGS. 1 A and 1B, an orthodontic bracket 10 comprises a self-ligating bracket for use in corrective orthodontic treatments that improve a patient's occlusion. The orthodontic bracket 10, which may be constructed from a metal, a ceramic, a plastic, or a composite construction of multiple types of these materials, includes a bracket body 12 having an archwire slot 20, a movable ligating cover 14 movable relative to the archwire slot 20 of the bracket body 12 in an occlusal-gingival direction between opened and closed positions, and a spring arm 16 that latches the ligating cover 14 in the closed position. When the ligating cover 14 is in the opened position shown in FIG. 1A, the archwire slot 20 is accessible for inserting an archwire 25 (FIG. 3). When the ligating cover 14 is in the closed position shown in FIG. 1B, access to archwire slot 20 is blocked or otherwise occluded.

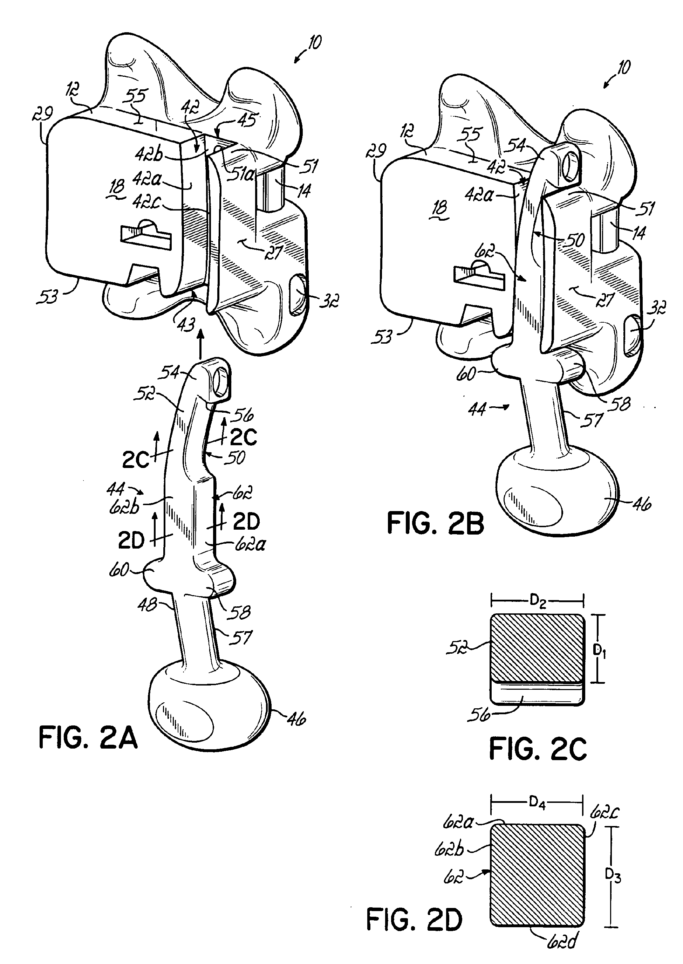

A bonding base 18 (FIG. 2A) on the bracket body 12 is used to secure the orthodontic bracket 10 to a tooth in any conventional manner, for example, by an appropriate orthodontic cement or adhesive. The archwire slot 20, which extends laterally across the bracket body 12, is bounded on three sides by a pair of side walls 22, 24 that are substantially parallel to each other and a base wall or floor 23 connecting the side walls 22, 24. When the orthodontic bracket 10 is mounted to a patient's tooth, the archwire slot 20 is oriented to extend roughly in a mesial/distal direction. The floor 23 of the archwire slot 20 is oriented perpendicular to the side walls 22, 24, thus forming right angle corners extending laterally along the floor 23 and surfaces that bound the archwire slot 20. An archwire 25 (FIG. 3), which is illustrated as a rectangular wire, may be inserted into an open side of the archwire slot 20 from the labial or buccal directions.

Extending through the ligating cover 14 is a throughhole 28 that is engaged by a detent 26 of the spring arm 16, when the ligating cover 14 is in the closed position, to lock or latch the ligating cover 14 in its closed position (FIG. 1B). The spring arm 16 is resiliently biased in a direction that urges the detent 26 away from the bonding base 18 and toward the ligating cover 14. In the closed position, the inserted archwire 25 is confined inside the archwire slot 20 between the side walls 22, 24, the floor 23, and the confronting face or underside of the ligating cover 14. Although the representative archwire 25 substantially fills the archwire slot 20 with a small peripheral clearance relative to the side walls 22, 24, floor 23, and confronting face of the ligating cover 14, it will be appreciated that a doctor may use smaller or larger sized archwires 25 at different treatment stages or to pursue different corrective orthodontic treatments.

Orthodontic brackets 10 of similar self-ligating construction are disclosed, for example, in U.S. Patent Application Serial No. 11/032,977 and U.S. Publication No. 2004-0072117. However, other types of closures, such as pivoting ligating covers, may be substituted for the sliding ligating cover 14 or, alternatively, the ligating cover 14 and spring arm 16 may be replaced by another type of ligating member.

The orthodontic bracket 10 may further include a mechanism for preventing disengagement of the opened ligating cover 14 from the bracket body 12 without hindering the movement of the ligating cover 14 between the opened and closed positions. The slide retention mechanism is represented by a ball 32 that secures the ligating cover 14 to the bracket body 12. The ball 32 is inserted into an open-ended bore 21 extending through the bracket body 12. The open-ended bore 21 is rearwardly and forwardly open. Facing the ball 32 along a side edge of the ligating cover 14 is a closed-ended slot 34. The ball 32 projects into the slot 34. In the opened position, the ball 32 contacts one closed end of the slot 34, which keeps the ligating cover 14 from becoming disengaged from the bracket body 12. When the ligating cover 14 is closed, the ball 32 may also contact the opposite closed end of the slot 34. The ball 32 may be replaced with another type of rigid projecting body, such as a pin. The contact between the ball 32 and the closed end of the slot 34 in the opened position provides a positive stop for the ligating cover 14.

The bracket 10 is permanently marked with an identification marking 30 that is placed or disposed on a portion of the bracket body 12 visible when bracket 10 is mounted to the tooth. The identification marking 30, which is preferably one or more alphanumeric characters, may be a coded identifier that allows the doctor to directly interpret the specific tooth to which that particular bracket 10 should be attached. The alphanumeric characters of identification marking 30 may comprise letters of the alphabet, numbers, punctuation marks, mathematical symbols, and combinations of these types of characters. The individual alphanumeric characters of identification marking 30 may have any suitable angular orientation relative to a reference point on the bracket 10.

As mentioned above, identification marking 30, representatively illustrated as the numerals "4" and "3" in FIG. 1A, may be placed at any location on the bracket body 12 at which marking 30 is visible when the bracket 10 is mounted to the patient's tooth. Specifically, the identification marking 30 may be disposed within the archwire slot 20 on the floor 23, although the invention is not so limited. Alternatively, the identification marking 30 may be disposed on one of the side walls 22, 24 of the slot 20, or alphanumeric characters may be placed on a combination of the side walls 22, 24 and floor 23. In yet other alternative embodiments, identification marking 30 may be placed on either a mesial side surface 27 or a distal side surface 29 of the bracket body 12.

Placing the alphanumeric characters of identification marking 30 on a visible surface of the bracket body 12 of bracket 10 represents an advantage of the present invention in comparison with conventional brackets (not shown) bearing an identification marking on the bottom surface of the bracket base because, when these conventional brackets are mounted to a patient's tooth, the marking is no longer visible. In particular, placing the alphanumeric characters of identification marking 30 on such visible surfaces of bracket body 12 may represent an advantage for transfer patients without patient records because a doctor does not have to debond the brackets 10 to determine the patient's prescription in the absence of a written prescription. Instead, the doctor is able to directly and swiftly interpret the specific tooth to which that particular bracket 10 should be attached. In addition to or instead of the bracket type (i.e., the intended tooth), identification marking 30 may advantageously encode additional information, such as torque and tip, relating to the bracket prescription.

Alternatively, an identification marking 30a, which is substantially identical to the identification marking 30 on the bracket body 12, may be disposed on a surface 15 of the ligating cover 14 that is visible when the bracket 10 is mounted to the tooth. Identification marking 30a is shown in phantom in FIG. 1B. Alternatively, both identification markings 30, 30a may be applied to the orthodontic bracket 10.

The bracket body 12 and ligating cover 14 of the orthodontic bracket 10 may be made by any injection molding process, such as metal injection molding (MIM), ceramic injection molding, or plastic injection molding. The equipment and procedures of such injection molding processes, which are understood by persons having ordinary skill in the art, are not elaborated upon herein. Generally, a mold cavity generally having the geometrical shape of the bracket body 12 or the ligating cover 14 is defined as a closed volume inside an injection mold 33 (FIG. 1C). An elevated or raised marking 31 (FIG. 1 C) including alphanumeric characters complementary (i.e., a mirror image) to the desired identification marking 30 is defined in the injection mold 33 during the injection molding process to fabricate the bracket body 12 and/or ligating cover 14. The constituent material used to form the bracket body 12 and/or ligating cover 14 is introduced into the mold cavity. The raised marking 31 displaces the material to replicate the alphanumeric characters in the molded bracket body 12 and/or ligating cover 14.

Metal injection molding processes are particularly advantageous for including intricate details in the design of the alphanumeric characters constituting the identification marking 30. In metal injection molding processes, a fine metal powder is mixed with a polymeric binder and the bracket body 12 and/or ligating cover 14 is molded as a green part that includes the identification marking 30. The green part is heat treated to remove substantially all of the binder material and then sintered using controlled temperature and atmosphere profiles to a suitable final density from the finished bracket body 12 and/or ligating cover 14 that is near the theoretical density of bulk constituent material.

The injection molding process used to fabricate the bracket body 12 of bracket 10 advantageously permits fine details, like alphanumeric characters, to be incorporated into the identification marking 30. For example, the alphanumeric characters comprising the identification marking 30 may have a character height of about 0.015" and a depth of 0.003". This ability to incorporate fine details contrasts with conventional identification markings co-formed on bracket bodies by conventional processes that are restricted to including simple non-alphanumeric geometrical shapes, such as bars or circles. These rudimentary geometrical shapes of these conventional identification markings must be interpreted in relation to the bracket type, which represents a significant disadvantage. The use of actual alphanumeric characters in the identification marking 30 may eliminate or simplify this interpretation process. The identification marking 30 is introduced during the process forming the bracket body 12. which does not require any additional post-manufacture secondary machining or processes.

The identification marking 30 may be applied to the bracket body 12 of a conventionally-ligated orthodontic bracket (not shown) without departing from the spirit and scope of the present invention.

With reference to FIGS. 2A, 2B, 2C and 2D wherein like reference numbers refer to like features in FIGS. 1A-1C, orthodontic bracket 10 further includes a passageway or vertical slot 42 and an auxiliary or appliance 44 inserted into the vertical slot 42. The vertical slot 42 extends through the bracket body 12 of bracket 10 between an entrance aperture 43 that penetrates one side surface 53 of the bracket body and an exit aperture 45 that penetrates an opposite side surface 55 of the bracket body 12. The edges of the entrance aperture 43 may be rounded to assist insertion of the appliance 44 into vertical slot 42.

A plurality of side walls 42a, 42b, 42c bound the vertical slot 42 on three sides and extend through the bracket body 12 to intersect side surface 53 at the entrance aperture 43 and side surface 55 at the exit aperture 45. When mounted to a tooth, the vertical slot 42 is closed in a lingual direction by either the tooth to which the bonding base 18 is mounted or by a bonding pad (not shown) that is secured to the bonding base 18. As a result, the entrance and exit apertures 43, 45 supply the only access paths to the vertical slot 42 during a corrective orthodontic treatment.

The vertical slot 42 may be aligned in a direction substantially orthogonal to the archwire slot 20 as shown in FIGS. 2A, 2B, although the invention is not so limited.

Alternatively, the vertical slot 42 may be inclined with an acute angle relative to the archwire slot 20. The vertical slot 42 may be offset laterally in a mesial direction from a centerline of the bracket body 12 toward the mesial side surface 27, as shown in FIGS. 2A, 2B. Alternatively, the vertical slot 42 may be offset laterally in a distal direction from a centerline of the bracket body 12 toward the distal side surface 29 of the bracket body 12. The vertical slot 42 may also be aligned with the centerline of the bracket body 12 at a location equidistant from the mesial and distal side surfaces 27, 29.

One end of the appliance 44 includes a coupling member in the form of a head 46, such as a ball or a hook, that is accessible for use by the doctor during a corrective orthodontic treatment using the bracket 10, and a shank 48 that extends away from the head 46. The appliance 44 further includes a spring-loaded latch 50 comprising a shank portion 52, which is slightly curved, and a detent 54 that projects from one side surface of the shank portion 52. When the appliance 44 is fully inserted into the vertical slot 42 of the bracket 40, as shown in FIG. 2B, a lip or shoulder 56 of the detent 54 operates as a catch by contacting a portion 51 of bracket body 12 surrounding or bordering (i.e., adjacent to and outside of) the exit aperture 45 from the vertical slot 42. This engagement locks or latches the appliance 44 within the vertical slot 42 and secures the appliance 44 against axial movement within the vertical slot 42 that could otherwise result in disengagement of the shoulder 56 from bracket portion 51. The shoulder 56 may continuously contact the bracket body portion 51 or may be spaced a short distance from the bracket body portion 51, as shown in FIGS. 2B and 3, such that axial movement causes the shoulder 56 to contact the bracket body portion 51.

When the appliance 44 is installed in the bracket 10, a central shank portion 62 of shank 48 is received in the vertical slot 42. A neck 57 of the shank 48 is positioned between the head 46. Rounded flanges 58, 60 project outwardly in mesial and distal directions from opposite sides of the shank 48 at a location between the neck 57 and the central shank portion 62.

As best shown in FIGS. 2C and 2D, shank portion 52 has a reduced cross-sectional area in a comparison with, or relative to, the central shank portion 62. Specifically, shank portion 52 has a cross-sectional profile with a cross-sectional area related to the dimensions D₁, D₂ and, because of the rectangular cross-sectional profile, a cross-sectional area given by the product of D₁ and D₂. The central shank portion 62 has a cross-sectional profile with a cross-sectional area related to the dimensions D₃, D₄ and, because of the rectangular cross-sectional profile, a cross-sectional area given by the product of D₃ and D₄. The diminished cross-section permits the shank portion 52 to resiliently flex relative to the remainder of the shank 48 and, more specifically, relative to central shank portion 62 of shank 48.

The neck 57 also has a cross-sectional profile with a reduced cross-sectional area in comparison with the cross-sectional profile of the central shank portion 62. The reduction in cross-sectional area of neck 57 relative to central shank portion 62 is similar to the difference in cross-sectional areas between shank portion 52 and central shank portion 62, which is illustrated in FIGS. 2C and 2D. The diminished cross-sectional area permits the neck 57 to be bent relative to the central shank portion 62. As a result, the doctor can move or re-position the head 46 of appliance 44 by plastically deforming or bending the neck 57 and without compromising the integrity of the spring-loaded latch 50. The central shank portion 62 blocks, or at the least significantly reduces, the transfer of these bending forces from neck 57 to shank portion 52 and, ultimately, to detent 54. As a result, bending forces applied to neck 57 do not compromise the engagement between the shoulder 56 of detent 54 and the contacting portion 51 of bracket body 12.

The weakening of the neck 57 that permits adjustments in the position of the head 46 is accomplished with a non-stranded construction in which a single continuous length of metal is configured with different solid cross-sectional profiles in the neck 57 and shank portion 52. Conventional stranded constructions are more difficult to manufacture as multiple manufacturing steps are required to assemble multiple flexible strands to define a neck and then to stiffen a length of the bundled strands, which remain flexible when bundled, to define a shank portion by, for example, tinning this length with a braze material or solder material. In a stranded construction, each of the individual strands has a cross-sectional area that is less than the cross-sectional area of the bundled group of strands.

At the time of installation, a bend 66 is provided at the junction between the neck 57 and the central shank portion 62. The bend 66 angles the neck 57 at an inclination angle relative to the central shank portion 62 such that the neck 57 and central shank portion 62 are not collinear. When the central shank portion 62 is inserted into the vertical slot 42, the bend 66 preferably orients the head 46 in a buccal direction from the direction of the central shank portion 62 such that the head 46 is unlikely to impinge the patient's gingiva. The bend 66 is in a different plane than the plane in which the detent 54 projects from the shank portion 52.

In use and with continued reference to Figures 2A, 2B, and 3, the bracket 10 is mounted to a tooth located in the patient's maxilla or mandible as part of a corrective orthodontic treatment. The self-locking vertical slot appliance 44 may be used for either maxillary or mandibular brackets 10. At some point during the corrective orthodontic treatment, the doctor may install the appliance 44 by manually manipulating the appliance 44 to insert the detent 54 and shank portion 52 into the entrance aperture 43 defining one open end of the vertical slot 42. During insertion, the appliance 44 is oriented such that the bend 66 orients the head 46 in a buccal direction and away from the patient's gingiva. The doctor moves the appliance 44 axially toward the exit aperture 45 representing an opposite open end of the vertical slot 42. Contact between the latch 50 and at least one of the side walls 42a, 42b, 42c of the vertical slot 42 deflects shank portion 52 laterally. When central shank portion 62 nears the fully inserted position in the vertical slot 42, the detent 54 emerges from the exit aperture 45 of the vertical slot 42 and the shoulder 56 passes an edge 51 a defined at the intersection of the side wall 42c and the bracket body portion 51. The shank portion 52 is then free to resiliently relax laterally so that the detent 54 moves to a position in which the shoulder 56 overlies the edge 51a and engages the bracket body portion 51.

After installation, central shank portion 62 and the majority of shank portion 52 reside within the vertical slot 42. The neck 57 and head 46 project from the entrance aperture 43 of the vertical slot 42. The detent 54 projects from the exit aperture 45 of the vertical slot 42. This engagement of the shoulder 56 with the portion 51 of bracket body 12 outside and adjacent to the exit aperture 45 locks or latches the appliance 44 against axial movement that would otherwise, if not resisted by the engagement, loosen the appliance 44 for removal from the vertical slot 42. After installation, the doctor may adjust the position of the head 46 without compromising the integrity of the detent 54 by bending the reduced cross-section neck 57.

The vertical slot 42 has a rectangular cross-section profile that complements the cross-sectional profile of the central shank portion 62, which operates to limit rotation of the installed appliance 44 through contact between side walls 42a, 42b, 42c and side walls 62a, 62b, 62c of the central shank portion 62. However, the invention is no so limited. In particular and in an alternative embodiment, the central shank portion 62 may be provided with a rounded cross-sectional profile having a circular or oval perimeter. In this instance, contact between the flanges 58, 60 and nearby portions of the bracket body 12 may operate to limit rotation of the installed appliance 44. In other alternative embodiments, the cross-sectional profiles for the vertical slot 42 and the central shank portion 62 may differ, yet limit rotation after installation. For example, the central shank portion 62 may have a trapezoidal cross-sectional profile with side walls (not shown) that contact the corresponding side walls 42a, 42b, 42c of the bracket body 12 bordering a rectangular vertical slot 42.

The appliance 44 may be removed from vertical slot 42 during the course of the corrective orthodontic treatment. Specifically, the detent 54 of spring-loaded latch 50 may be disengaged by applying an axial force generally along the central axis of vertical slot 42 sufficient to overcome the engagement of the shoulder 56 with the contacted portion 51 of bracket body 12 outside and adjacent to the exit aperture 45. After the detent 54 is disengaged, the appliance 44 is removed from the vertical slot 42. A ligature director (not shown) may be used to "crowbar" the appliance 44 out of the bracket 10 by using the bracket body 12 as a pivot point or fulcrum. The ability to remove the appliance 44, when not needed during patient treatment, represents a significant advantage of the appliance 44 of the present invention in comparison with conventional vertical slot appliances. Because the head 46 of the appliance 44 may be uncomfortable to a patient due to gingival or buccal impingement, adding appliance 44 to bracket 40 only when the patient needs the benefit of an additional correction device mounted to the head 46 during treatment improves patient comfort.

With reference to FIG. 4, a spring-loaded latch 67 having a detent 68 similar to detent 54 of spring-loaded latch 50 (FIGS. 2A, 2B) may be utilized with an appliance 70 in the form of an uprighting or torquing spring. Appliance 70 is used to exert torque between the archwire 25 (FIG. 3) and the bracket 10 (FIG. 1A) and, therefore, to transfer torque to the tooth to which the bracket 10 is mounted. Appliance 70 generally includes a length of wire bent into a shape having a coil 72 with one or more turns, a shank or anchoring post 74 adapted to be inserted into the vertical slot 42 of bracket 10 for purposes of anchoring one end of the coil 72 to the bracket 10, and a lever arm 76 for connecting the opposite end of the coil 72 to the archwire 25. A hook 78 at the free end of the lever arm 76 is shaped to engage the archwire 25. The lever arm 76 and hook 78 collectively operate as a coupling member.

Detent 68, which is joined by a reduced cross-sectional profile shank portion 79 to a central section 77 of the anchoring post 74, functions in a manner similar to detent 54 for releasably securing the appliance 70 with the bracket 10. The central section 77 and a majority of the shank portion 79 are received in the vertical slot 42 (FIGS. 2A, 2B) when the detent 68 of spring-loaded latch 67 couples the appliance 70 with the bracket body 12. Coil 72 is optional and may be omitted in certain embodiments of the present invention.

Appliances 44 (FIG. 2A) and 70 (FIG. 4) are illustrated as used in conjunction with orthodontic bracket 10, which is self-ligating because of the presence of the ligating cover 14. However, these appliances 44, 70 may also be used with a conventionally-ligated orthodontic bracket (not shown) for gaining the advantages offered by the respective spring-loaded latches 50, 67.

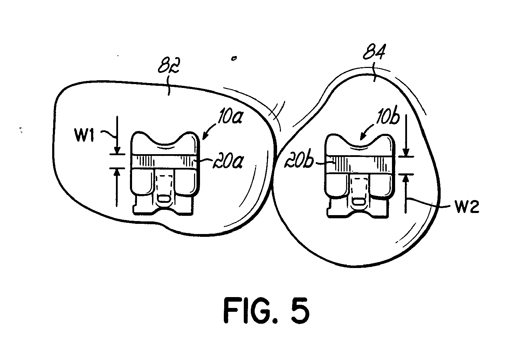

With reference to FIG. 5, orthodontic brackets 10a, 10b, each substantially identical to orthodontic bracket 10, may be provided with variable archwire slot dimensions to compensate for the loss of torque control experienced by the anterior brackets among a set of applied brackets. Specifically, the clearance between the archwire 25 (FIG. 3) and the archwire slot 20 of orthodontic bracket 10a used on anterior teeth, such as an anterior tooth 82, may be reduced in comparison to bracket 10b applied to non-anterior or posterior teeth, such as a posterior tooth 84. The reduced clearance between the archwire slot 20 of the bracket 10a on anterior tooth 82 and the archwire will effectively increase torque control of the tooth 82. This may eliminate the need for conventional high torque brackets or pre-torqued archwires during corrective orthodontic treatments.

To provide the variable archwire slot 20, variable archwire slot sizes are defined within a family (such as the .022 slot width family or the .018 slot width family) of the orthodontic brackets 10a,b. As used herein, slot widths are understood to be dimensioned in inches. Bracket 10a on the anterior tooth 82 will have a slot width of W1, which is measured as a separation between the side walls 22, 24 along a majority of an archwire slot 20a, substantially identical to archwire slot 20 (FIGS. 1A, 1B). Similarly, bracket 10b applied to the posterior tooth 84 will have a slot width of W2 for an archwire slot 20b measured in a similar manner. The difference in slot width may be advantageously less than 0.004 inches.

As a specific example of this variability, the .022 slot size bracket family may be modified to use .022 archwire slots 20b in orthodontic brackets 10b placed on the patient's posterior teeth 84 and .021 archwire slots 20a in orthodontic brackets 10a placed on the patient's anterior teeth 82. In this modified bracket family, the side walls 22, 24 of the archwire slot 20b is separated by approximately .022 inches and the side walls 22, 24 of the archwire slot 20a are separated by approximately .021 inches. As a result, the archwire clearance for bracket 10a is approximately one mil smaller than the archwire clearance for bracket 10b. The reduced clearance of the archwire within the archwire slot 20a provides the gain in torque control expected on anterior teeth 82. Similar considerations apply for the .018 family of orthodontic brackets 10 and any other size families of brackets 10 as recognized by a person of ordinary skill in the art. It is contemplated that the narrower slot width bracket 10a may be placed on posterior tooth 84 and bracket 10b may be placed on anterior tooth 82.

The variable archwire slot sizes are created by the way the slot sizes are toleranced to provide spatial clearance with the archwire and may be applied for orthodontic brackets 10 used to treat either the upper jaw or the lower jaw. Variable archwire slot sizes may be implemented in other types of self-ligating brackets and in brackets with conventional ligation and, consequently, the use of variable archwire slot sizes is not limited to the specific construction of orthodontic bracket 10.

While the present invention has been illustrated by a description of various preferred embodiments and while these embodiments have been described in considerable detail, additional advantages and modifications will readily appear to those skilled in the art.

## Claims

1. An appliance for use with an orthodontic bracket having a passageway extending through a bracket body between first and second apertures, the appliance comprising:
a shank configured to extend in the passageway, said shank including a first end projecting from the first aperture and a second end projecting from the second aperture when said shank extends in the passageway; and
a spring-loaded latch disposed at said second end of said shank, said spring-loaded latch comprising a resilient portion of said shank and a detent positioned on said shank to contact a portion of said bracket body adjacent to and outside of said second aperture for securing said appliance to the orthodontic bracket.

2. The appliance of claim 1 wherein said first end of said shank further comprises a coupling member for transferring an external force applied to said coupling member to said shank for subsequent transfer of the external force to said bracket body by contact between said shank and the passageway.

3. The appliance of claim 2 wherein said shank comprises a central section configured to be disposed in the passageway, and said first end of said shank further comprises a neck separating said coupling member from said central section and a bend that angles said neck relative to said central section.

4. The appliance of claim 2 wherein said shank comprises a central section configured to be disposed in the passageway, said first end of said shank further comprises a neck separating said coupling member from said central section, and said neck has a smaller cross-sectional area than said central section.

5. The appliance of any preceding claim wherein said shank comprises a central section configured to be disposed in the passageway, and said resilient portion of said shank has a smaller cross-sectional area than said central section.

6. The appliance of any preceding claim wherein said detent includes a shoulder that projects over the portion of the bracket body.

7. An apparatus for use in orthodontic treatments, the apparatus comprising an orthodontic bracket including a bracket body, a first aperture, a second aperture, and a passageway extending through said bracket body between said first and second apertures, and an appliance as claimed in any preceding claim.

8. The apparatus of claim 7 wherein said orthodontic bracket includes an archwire slot defined in said bracket body and a ligating cover mounted to said bracket body for movement relative to said bracket body between an opened position permitting access to the archwire slot and a closed position for closing the access to the archwire slot.

9. An appliance for an orthodontic bracket having a passageway extending between first and second apertures, comprising:
a coupling member; and
a shank having a central portion received in the passageway when said appliance is mounted to the orthodontic bracket and a neck disposed between said central portion and said coupling member, and said neck and said central portion comprising a length of continuous, non-stranded wire, and said neck having a smaller cross-sectional area than said central portion.

10. The appliance of claim 9 wherein said shank further includes a first end adapted to project from the first aperture, a second end adapted to project from the second aperture when said central portion is disposed in the passageway, and a spring-loaded latch disposed at said second end of said shank.

11. The appliance of either claim 9 or claim 10 herein said spring-loaded latch comprises a resilient portion of said shank and a detent adapted to contact a portion of said bracket body adjacent to and outside of the second aperture for securing said shank to the orthodontic bracket.

12. A kit for performing an orthodontic treatment with an archwire, comprising:
a first orthodontic bracket having a first bracket body, a first archwire slot defined in said first bracket body by a substantially parallel first plurality of side walls, and a first ligating cover mounted to said first bracket body for movement relative to said first bracket body between an opened position permitting access to said first archwire slot and a closed position for closing the access to said first archwire slot, said first plurality of side walls separated along a majority of said first archwire slot by a first slot width; and
a second orthodontic bracket having a second bracket body, a second archwire slot defined in said second bracket body by a substantially parallel second plurality of side walls, and a second ligating cover mounted to said second bracket body for movement relative to said second bracket body between an opened position permitting access to said second archwire slot and a closed position for closing the access to said second archwire slot, said second plurality of side walls separated along a majority of said second archwire slot by a second slot width different from said first slot width.

13. The kit of claim 12 wherein said first slot width differs from said second slot width by less than 0.004 inches.

14. The kit of either claim 12 or claim 13 wherein said first slot width is about 0.022 inches and said second slot width is about 0.021 inches.

15. An orthodontic bracket for coupling an archwire with a tooth, comprising:
a bracket body having a visible surface when said orthodontic bracket is coupled with the tooth; and
a molded identification marking comprising at least one alphanumeric character disposed on said visible surface.

16. The orthodontic bracket of claim 15 wherein said identification marking includes alphanumeric characters representative of bracket prescription information.

17. The orthodontic bracket of either claim 15 or claim 16 wherein said bracket body further comprises:
an archwire slot bounded by a plurality of slot surfaces, said archwire slot accessible for receiving the archwire when said bracket body is mounted to the tooth, and said visible surface further comprising at least one of said slot surfaces.

18. A self-ligating orthodontic bracket for coupling an archwire with a tooth, comprising:
a bracket body having an archwire slot;
a ligating cover coupled with said bracket body for movement relative to said archwire slot between an opened position for inserting the archwire into said archwire slot and a closed position for securing the archwire within the archwire slot, said ligating cover having a visible surface; and
a molded identification marking comprising at least one alphanumeric character disposed on said visible surface.

19. The orthodontic bracket of claim 18 wherein said identification marking includes alphanumeric characters representative of bracket prescription information.

20. A method of making an orthodontic bracket, comprising:
injection molding a component of the orthodontic bracket; and
defining an identification marking on the component during the injection molding.

21. The method of claim 20 wherein injection molding the component further comprises:
introducing a metal powder into a mold having a mold cavity shaped to form the component.

22. The method of claim 21 wherein defining the identification marking further comprises:
placing a raised replica of the identification marking on the mold that projects into the mold cavity; and
displacing the metal powder with the raised replica to define the identification marking on the component.

23. The method of any one of claims 20 to 22 wherein the component is selected from the group consisting of a bracket body and a ligating cover.
